(19) Europäisches Patentamt
European Patent Office
Office européen des brevets

(11) **EP 3 950 898 A1**

(12) **EUROPEAN PATENT APPLICATION**
published in accordance with Art. 153(4) EPC


(43) Date of publication:
**09.02.2022 Bulletin 2022/06**

(21) Application number: **19920984.2**

(22) Date of filing: **26.03.2019**

(51) International Patent Classification (IPC):
***C10M 169/04*** *(2006.01)* ***C08F 4/6592*** *(2006.01)*
***C08F 210/16*** *(2006.01)* ***C10M 101/02*** *(2006.01)*
***C10M 107/02*** *(2006.01)* ***C10M 143/00*** *(2006.01)*

(52) Cooperative Patent Classification (CPC):
**C08F 4/6592; C08F 210/16; C10M 169/04;**
C10M 101/02; C10M 107/02; C10M 143/00

(86) International application number:
**PCT/JP2019/013003**

(87) International publication number:
**WO 2020/194548 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **Mitsui Chemicals, Inc.**
**Tokyo 105-7122 (JP)**

(72) Inventor: **ABE Shota**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**


(54) **LUBRICATING OIL COMPOSITION FOR AUTOMOBILE GEARS AND METHOD FOR PRODUCING SAME**


(57) [Object]

To provide a lubricating oil composition for automobile gear oil having an excellent high-level balance between shear stability, temperature viscosity properties and low-temperature viscosity properties, and further having excellent thermal and oxidation stability.

[Solution]

A lubricating oil composition for automobile gears, including a lubricant base oil and a liquid random copolymer of ethylene and α-olefin(s), the liquid random copolymer being produced using a specific catalyst, wherein the lubricating oil composition has a kinematic viscosity at 100°C of 7 to 30 $mm^2/s$, and wherein the lubricant base oil consists of a mineral oil having a kinematic viscosity at 100°C of 2 to 10 $mm^2/s$, a viscosity index of 105 or more and a pour point of -10°C or lower, and/or a synthetic oil having a kinematic viscosity at 100°C of 1 to 10 $mm^2/s$, a viscosity index of 120 or more and a pour point of -30°C or lower.


EP 3 950 898 A1

## Description

Technical Field

The present invention relates to a lubricating oil composition for automobile gears and a method for producing the same.

Background Art

Demanded of lubricating oil such as gear oil, transmission oil, operating oil, and grease, is performance such as protection and heat dissipation of internal combustion engines and machine tools, and additionally demanded are various kinds of performance such as wear resistance, heat resistance, sludge resistance, lubricating oil consumption properties, as well as fuel efficiency. Moreover, in recent years, the demands for performance have become increasingly advanced, in conjunction with the higher performance, higher output, and harsher operating conditions etc. of internal combustion engines and industrial machinery in use. In particular, the usage environment of lubricating oil has recently become severe; meanwhile there is tendency towards demand for a longer service life due to concern for environmental issues, and thus there is demand for improvements to the heat resistance and oxidation stability, as well as demand for suppression of reduced viscosity caused by shear stress from engines and machinery; namely, improvements to the shear stability of lubricating oil. Meanwhile, in order to improve engine energy conversion efficiency, as well as to ensure good lubricity of engines under very low-temperature environments, temperature viscosity properties such as maintaining an oil film of lubricating oil under high temperatures, and maintaining better fluidity under low temperatures, are also crucially regarded. As one index of the temperature viscosity properties mentioned here, temperature viscosity properties may be calculated as numerical values by a viscosity index calculated by the method described in JIS K2283, where a higher viscosity index expresses more excellent temperature viscosity properties.

Accordingly, there is demand for a material for lubricating oil, where the material has excellent heat resistance, oxidation stability and shear stability, and has good temperature viscosity properties.

In particular, in lubricating oils utilized in automobiles; namely, in gear oils for automobiles, such as oil for differential gears or for manual transmissions, excellent temperature viscosity properties, and furthermore, high fluidity under very low-temperatures, for example -40°C; namely, excellent low-temperature viscosity properties, which are even better than those until now, have come to be in demand. These viscosity properties are directly linked to automobile fuel consumption performance. However, the demand for such improvement in performance is because of carbon dioxide emission regulations and fuel consumption regulations for passenger vehicles, as well as future targets established since the adoption of the 1997 Kyoto Protocol by governments around the world in recent years.

Based on this, in aiming to achieve fuel consumption targets, the amount of lubricating oil used is also reduced, as passenger vehicles engines become smaller for fuel consumption improvement. Therefore, there is an increased burden in relation to lubricating oil, where longer service life of lubricating oil has come to be in demand.

Gear oils for automobiles receive shear stress by gears, bearings and the like, and therefore molecules of the base material utilized in the lubricating oil are cleaved with time of usage, resulting in deterioration in lubricating oil viscosity. The deterioration in lubricating oil viscosity causes contact between the gears and the metal, resulting in significant damage to machinery. Thus, it is necessary to predict beforehand the viscosity deterioration over a time period of use, and prepare the lubricating oil during production by raising the initial viscosity, so that the lubricating oil can perform ideal lubrication after usage and ageing. J306, which is the viscosity standard for gear oil for automobiles according to the Society of Automobile Engineers (SAE), is shown in Table 1. This viscosity standard establishes the minimum viscosity after the shear test as prescribed by CRC L-45-T-93.

Table 1

| Viscosity standard *1 | Maximum temperature which shows 150,000 mPa·s *2 | 100°C kinematic viscosity *3 | | Minimum kinematic viscosity at 100°C after shear test *4 |
|---|---|---|---|---|
| | | Min | Max | |
| 75 W | -40°C | 4.1 | Not prescribed | 4.1 |
| 80 W | -26°C | 7.0 | | 7.0 |

(continued)

| Viscosity standard *1 | Maximum temperature which shows 150,000 mPa·s *2 | 100°C kinematic viscosity *3 | | Minimum kinematic viscosity at 100°C after shear test *4 |
|---|---|---|---|---|
| | | Min | Max | |
| 80 | Not prescribed | 7.0 | 11.0 | 7.0 |
| 85 | | 11.0 | 13.5 | 11.0 |
| 90 | | 13.5 | 18.5 | 13.5 |
| 110 | | 18.5 | 24.0 | 18.5 |
| 140 | | 24.0 | 32.5 | 24.0 |

*1: Gear oils which satisfy two viscosity standards in the Table are described as multi-grade gear oil with both viscosity standards. For example, the description 75W-90 is indicated when the standards 75W and the 90 in the table are satisfied.
*2: Measured in accordance with ASTM D2983
*3: Measured in accordance with ASTM D445
*4: Conducted shear test in accordance with CRC L-45-T-93, and measured 100°C kinematic viscosity after testing

Naturally, if the shear stability of the base material utilized in the lubricating oil is excellent; namely if the service life is long, it is no longer necessary to raise the initial viscosity, and as a result, fuel consumption can be improved, because the agitation resistance of the lubricating oil with respect to the gears can be lowered.

Moreover, if the temperature viscosity properties; namely the temperature dependence of the lubricating oil viscosity can be reduced, then a viscosity rise under a low-temperature environment can also be suppressed, and the resulting gear resistance due to lubricating oil is relatively lowered compared to the conventional technology, and thus fuel consumption can be improved.

Furthermore, as recent fuel consumption improvement measures, the viscosity of differential gear oil or manual transmission oil has been lowered compared to that of conventional oil, and thereby a reduction in the agitation resistance due to the lubricating oil has been made to be realized. However, because this leads to an increasing danger of metal contact in the gears, materials with very high shear stability in which viscosity deterioration does not occur have come to be in demand.

In order to improve the temperature viscosity properties of lubricating oil as a fuel consumption improvement measurement, lubricating oil compositions utilizing methacrylate copolymers and methacrylic acid ester copolymers as viscosity modifying agents or viscosity index improving agents, are conventionally known, as exemplified in Patent Literature 1 to 4. However, in terms of shear stability, there is room for improving lubricating oil compositions utilizing these polymers.

Moreover, amongst automobiles, unlike regular automobiles, a huge load is carried in the differential gears of large automobiles, due to carrying loads as well as the vehicle load weight, and large automobiles also travel long distances annually. Thus, gear oil cannot withstand utilization under a harsh environment, and shear stability is insufficient with the aforementioned methacrylate copolymers, methacrylic acid ester copolymers etc. Therefore, viscosity modifying agents such as liquid polybutene and bright stock, which have excellent shear stability, are utilized in such gear oil. However, amidst the recent demands for increased fuel efficiency, there is room for improving these viscosity modifying agents, in terms of temperature viscosity properties and low-temperature viscosity properties.

It is conventionally known that the shear stability of lubricating oil compositions depends on the molecular weight of the components contained therein. That is, viscosity deterioration easily occurs due to shear stress in lubricating oil compositions containing components with higher molecular weight, and this viscosity reduction rate is correlated with the molecular weight of the components contained such compositions.

Meanwhile, temperature viscosity properties and low-temperature viscosity properties of lubricating oil compositions improve by containing higher molecular weight components. That is, although temperature viscosity properties improve with a higher molecular weight in the viscosity modifying agents or viscosity index improving agents utilized in lubricating oil compositions, this leads to a conflict in that the shear stability becomes deteriorated. Regarding this point, there is room for improvement from the perspective of balancing the shear stability with temperature viscosity properties.

Patent Literature 5 discloses a lubricating oil composition containing a specific lubricant base oil and a specific ethylene-$\alpha$-olefin copolymer, where this composition has a balance of these properties, and which is suitably applicable to automobile gears.

Moreover, Patent Literature 6 describes a method for producing a liquid random copolymer of ethylene and $\alpha$-

olefin, wherein further described is that this copolymer is useful as a lubricating oil.

Citation List

Patent Literature

Patent Literature 1: JP H08-53683 A
Patent Literature 2: JP 4414123 B
Patent Literature 3: JP 3816847 B
Patent Literature 4: JP 2009-256665 A
Patent Literature 5: JP 2016-069404 A
Patent Literature 6: EP 2921509 A1

Summary of Invention

Technical Problem

However, there was further room for improvement in conventional lubricating oil compositions, from the perspective of providing a lubricating oil composition for automobile gears having an excellent high-level balance between shear stability, temperature viscosity properties and low-temperature viscosity properties, and further having excellent thermal and oxidation stability.

Solution to Problem

The present inventors keenly investigated the development of a lubricating oil composition having excellent performance, and as a result, discovered that the aforementioned problem can be solved with a lubricating oil composition which contains, with a specific lubricant base oil, a specific lubricant base oil, and an ethylene-α-olefin copolymer prepared by means of a specific catalyst, and satisfies specific conditions, thus arriving at the perfection of the present invention. The present invention specifically mentions the below aspect.

[1] A lubricating oil composition for automobile gears, comprising a lubricant base oil, and a liquid random copolymer (C) of ethylene and α-olefin, the liquid random copolymer (C) being prepared by the below method (α), and the lubricating oil composition having a kinematic viscosity at 100°C of 7 to 30 $mm^2/s$,
wherein the lubricant base oil consists of a mineral oil (A) having the properties of the below (A1) to (A3), and/or a synthetic oil (B) having the properties of the below (B1) to (B3).
(A1) The mineral oil has a kinematic viscosity at 100°C of 2 to 10 $mm^2/s$.
(A2) The mineral oil has a viscosity index of 105 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower.

(Method (α))

A method (α) for producing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

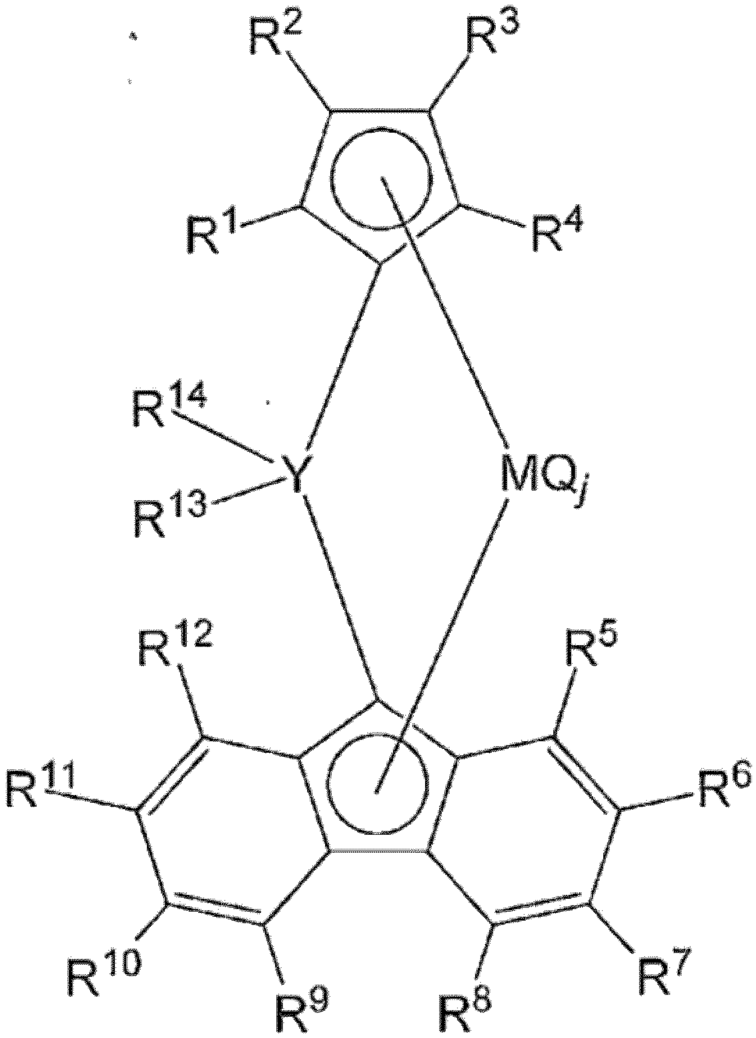

... (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

[2] A lubricating oil composition for automobile gears of the aforementioned [1], wherein in the metallocene compound represented by the above Formula 1, at least one among substituents ($R^1$, $R^2$, $R^3$ and $R^4$) bonded to a cyclopentadienyl group is a hydrocarbon group having 4 or more carbon atoms.

[3] A lubricating oil composition for automobile gears of the aforementioned [1] or [2], wherein $R^6$ and $R^{11}$, being the same, are hydrocarbon groups having 1 to 20 carbon atoms.

[4] A lubricating oil composition for automobile gears of any of the aforementioned [1] to [3], wherein in the metallocene compound represented by the above Formula 1, substituent ($R^2$ or $R^3$) bonded to the 3-position of the cyclopentadienyl group is a hydrocarbon group.

[5] A lubricating oil composition for automobile gears of the aforementioned [4], wherein in the metallocene compound represented by the above Formula 1, the hydrocarbon group ($R^2$ or $R^3$) bonded to the 3-position of the cyclopentadienyl group is an n-butyl group.

[6] A lubricating oil composition for automobile gears of any of the aforementioned [1] to [5], wherein in the metallocene compound represented by the above Formula 1, the hydrocarbon groups ($R^6$ and $R^{11}$) bonded to the 2-position and 7-position of the fluorenyl group are all tert-butyl groups.

[7] A lubricating oil composition for automobile gears of any of the aforementioned [1] to [6], wherein the compound which reacts with the bridged metallocene compound to form an ion pair is a compound represented by the following Formula 6.

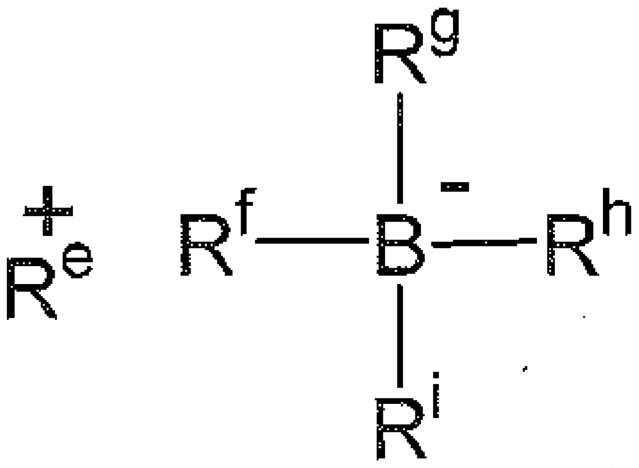

··· (Formula 6)

[In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.]

[8] A lubricating oil composition for automobile gears of the aforementioned [7], wherein the ammonium cation is a dimethylanilinium cation.

[9] A lubricating oil composition for automobile gears of the aforementioned [7] or [8], wherein the catalyst system further comprises an organoaluminum compound selected from a group consisting of trimethyl aluminum and triisobutyl aluminum.

[10] A lubricating oil composition for automobile gears of any of the aforementioned [1] to [9], wherein the α-olefin of the liquid random copolymer (C) is propylen

[11] A lubricating oil composition for automobile gears of any of the aforementioned [1] to [10], wherein the synthetic oil (B) contains an ester, and a synthetic oil other than ester.

[12] A lubricating oil composition for automobile gears, comprising a lubricant base oil, and a liquid random copolymer of ethylene and α-olefin, the liquid random copolymer having the properties of the below (C1) to (C5), and the lubricating oil composition having a kinematic viscosity at 100°C of 7 to 30 $mm^2/s$,
wherein the lubricant base oil consists of a mineral oil (A) having the properties of the below (A1) to (A3), and/or a synthetic oil (B) having the properties of the below (B1) to (B3). (A1) The mineral oil has a kinematic viscosity at 100°C of 2 to 10 $mm^2/s$.

(A2) The mineral oil has a viscosity index of 105 or more.

(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower.
(C1) The liquid random copolymer comprises 40 to 60 mol % of ethylene units and 60 to 40 mol % of α-olefin units having 3 to 20 carbon atoms.
(C2) The liquid random copolymer has a number average molecular weight (Mn) of 500 to 10,000 and a molecular weight distribution (Mw/Mn, Mw is the weight average molecular weight) of 3 or less, as measured by Gel Permeation Chromatography (GPC).
(C3) The liquid random copolymer has a kinematic viscosity at 100°C of 30 to 5,000 $mm^2/s$.
(C4) The liquid random copolymer has a pour point of 30 to - 45°C.
(C5) The liquid random copolymer has a Bromine Number of 0.1 g / 100 g or.

[13] A differential gear oil for large automobiles, consisting of the lubricating oil composition for automobile gears of any of the aforementioned [1] to [12].

[14] A method for producing a lubricating oil composition for automobile gears, comprising the steps of:

preparing a liquid random copolymer (C) of ethylene and α-olefin by the following method (α); and
preparing a lubricating oil composition for automobile gears by mixing a lubricant base oil and the liquid random copolymer (C), the composition having a kinematic viscosity at 100 °C of 7 to 30 $mm^2/s$,
wherein the lubricant base oil consists of a mineral oil (A) having the properties of the below (A1) to (A3), and/or a synthetic oil (B) having the properties of the below (B1) to (B3).

(A1) The mineral oil has a kinematic viscosity at 100°C of 2 to 10 $mm^2/s$.
(A2) The mineral oil has a viscosity index of 105 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower.

(Method (α))

A method (α) for producing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

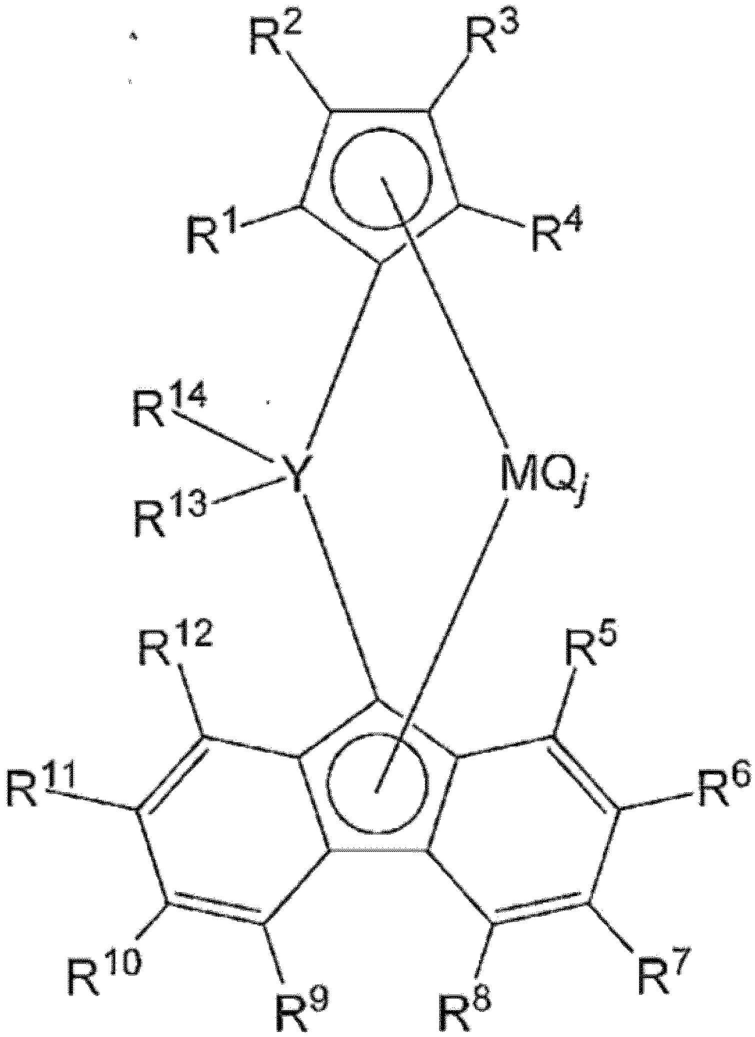

...(Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Advantageous Effects of Invention

The lubricating oil composition of the present invention has an excellent high-level balance between shear stability, temperature viscosity properties and low-temperature viscosity properties, and further has excellent thermal and oxidation stability. The lubricating oil composition is suitably applicable to automobile gears, and is particularly suitable as differential gear oil for large automobiles.

Description of Embodiments

The lubricating oil composition for automobile gears according to the present invention (hereinafter, also referred to merely as "lubricating oil composition") will be explained in detail below.

The lubricating oil composition for automobile gears according to the present invention is comprises a lubricant base oil, and a liquid random copolymer (C) of ethylene and α-olefin prepared by method (α) (may also be described in the present specification as "ethylene-α-olefin copolymer (C)"), the lubricating oil composition having a kinematic viscosity at 100°C of 7 to 30 $mm^2/s$, where the lubricant base oil consists of a mineral oil (A) and/or synthetic oil (B).

< Lubricant base oil >

In the lubricant base oil used in the present invention, performance and quality such as viscosity properties, heat resistance and oxidation stability, will differ depending on the producing and refining processes etc. of the lubricant base oil. The API (American Petroleum Institute) categorizes lubricant base oil into five types: Group I, II, III, IV and V. These API categories are defined in the API Publication 1509, 15th Edition, Appendix E, April 2002, and are as shown in Table 2.

Table 2

| Group | Type | Viscosity index *1 | Saturated hydrocarbon portion *2 (vol %) | Sulfur portion *3 (% by weight) |
|---|---|---|---|---|
| I | Mineral oil | 80 to 120 | < 90 | > 0.03 |
| II | Mineral oil | 80 to 120 | ≥ 90 | ≤ 0.03 |
| III | Mineral oil | ≥ 120 | ≥ 90 | ≤ 0.03 |
| IV | Poly-α-olefin | | | |
| V | Lubricant base material other than the aforementioned | | | |

*1: Measured in accordance with ASTM D445 (JIS K2283)

*2: Measured in accordance with ASTM D3238

*3: Measured in accordance with ASTM D4294 (JIS K2541)

*4: Mineral oils whose saturated hydrocarbon portion is less than 90 vol % and sulfur portion is less than 0.03 % by weight, or whose saturated hydrocarbon portion is 90 vol % or more and sulfur portion exceeds 0.03 % by weight, are included in Group I.

< (A) Mineral oil >

The mineral oil (A) has the properties of (A1) to (A3) below.

(A1) The mineral oil has a kinematic viscosity at 100°C of 2 to 10 $mm^2/s$

The value of this kinematic viscosity is that as measured in accordance with the method described in JIS K2283. The kinematic viscosity at 100°C of mineral oil (A) is 2 to 10 $mm^2/s$, preferably 2.5 to 8 $mm^2/s$, and more preferably 3.5 to 6.5 $mm^2/s$. With a kinematic viscosity at 100°C in this range, the lubricating oil composition of the present invention is excellent in terms of volatility and temperature viscosity properties.

(A2) The mineral oil has a viscosity index of 105 or more

The value of this viscosity index is that as measured in accordance with the method described in JIS K2283. The viscosity index of mineral oil (A) is 105 or more, preferably 115 or more, and more preferably 120 or more. With a viscosity index in this range, the lubricating oil composition of the present invention has excellent temperature viscosity properties.

(A3) The mineral oil has a pour point of -10°C or lower

The value of this pour point is that as measured in accordance with the method described in ASTM D97. The pour point of mineral oil (A) is -10°C or lower, and preferably -15°C or lower. With a pour point in this range, the lubricating oil composition of the present invention has excellent low-temperature viscosity properties, when using the mineral oil (A) together with a pour point lowering agent.
The mineral oil (A) in the present invention is ascribed to Groups I to III of the aforementioned API categories.
The quality of the mineral oil is as mentioned above, where the aforementioned respective qualities of mineral oil are obtainable depending on the refining method. Exemplifications of the mineral oil (A) specifically include: a lubricant base oil, in which a lubricating oil fraction obtained by reduced pressure distillation of an atmospheric residue which is obtainable by the atmospheric distillation of crude oil, is refined by one or more treatments such as solvent deasphalting, solvent extraction, hydrocracking, solvent dewaxing, hydrorefining; or a lubricant base oil of wax isomerized mineral oil.
Moreover, a Gas-to-Liquid (GTL) base oil obtained by the Fisher-Tropsch method is a base oil which can also be suitably utilized as Group III mineral oil. Such GTL base oil is also handled as Group III+ lubricant base oil, which are described e.g. in the following Patent Literatures: EP0776959, EP0668342, WO97/21788, WO00/15736, WO00/14188, WO00/14187, WO00/14183, WO00/14179, WO00/08115, WO99/41332, EP1029029, WO01/18156 and WO01/57166.
In the lubricating oil composition of the present invention, the mineral oil (A) may be used alone as a lubricant base oil, or any mixture etc. of two or more lubricating oils selected from the synthetic oil (B) and mineral oil (A) may be used as a lubricant base oil.

< (B) Synthetic oil >

The synthetic oil (B) has the properties of (B1) to (B3) below.

(B1) The synthetic oil has a kinematic viscosity at 100°C of 1 to 10 $mm^2/s$

The value of this kinematic viscosity is that as measured in accordance with the method described in JIS K2283. The kinematic viscosity at 100°C of synthetic oil (B) is 1 to 10 $mm^2/s$, preferably 2 to 8 $mm^2/s$, and more preferably 3.5 to 6 $mm^2/s$. With a kinematic viscosity at 100°C in this range, the lubricating oil composition of the present invention is excellent in terms of volatility and temperature viscosity properties.

(B2) The synthetic oil has a viscosity index of 120 or more

The value of this viscosity index is that as measured in accordance with the method described in JIS K2283. The viscosity index of synthetic oil (B) is 120 or more, and preferably 125 or more. With a viscosity index in this range, the lubricating oil composition of the present invention has excellent temperature viscosity properties.

(B3) The synthetic oil has a pour point of -30°C or lower.

The value of this pour point is that as measured in accordance with the method described in ASTM D97. The pour point of synthetic oil (B) is -30°C or lower, preferably -40°C or lower, more preferably -50°C or lower, and furthermore preferably -60°C or lower. With a pour point in this range, the lubricating oil composition of the present invention has excellent low-temperature viscosity properties.
The synthetic oil (B) in the present invention is ascribed to Group IV or Group V in the aforementioned API categories.
Poly-$\alpha$-olefins, which are ascribed to Group IV, can be obtained by oligomerizing higher $\alpha$-olefins with an acid catalyst, as described in e.g. US Patent 3,780,128, US Patent 4,032,591, and JP H01-163136 A. Of these, a low molecular weight oligomer of at least one olefin selected from an olefin having 8 or more carbon atoms can be utilized as the poly-$\alpha$-olefin. If utilizing a poly-$\alpha$-olefin as the lubricant base oil, a lubricating oil composition having remarkably excellent temperature viscosity properties, low-temperature viscosity properties, as well as heat resistance is obtainable.
Poly-$\alpha$-olefins are also industrially available, where those with a 100°C kinematic viscosity of 2 $mm^2/s$ to 10 $mm^2/s$ are commercially available. Examples include the NEXBASE 2000 series (made by NESTE), Spectrasyn (made by ExxonMobil Chemical), Durasyn (made by INEOS Oligomers), and Synfluid (made by Chevron Phillips Chemical).
As the synthetic oil ascribed to Group V, examples include alkyl benzenes, alkyl naphthalenes, isobutene oligomers and hydrides thereof, paraffins, polyoxy alkylene glycol, dialkyl diphenylether, polyphenylether, and esters.
Most of the alkyl benzenes and alkyl naphthalenes are usually dialkyl benzene or dialkyl naphthalene whose alkyl chain length has 6 to 14 carbon atoms, where such alkyl benzenes or alkyl naphthalenes are produced by the

Friedel-Crafts alkylation reaction of benzene or naphthalene with olefin. In the production of alkyl benzenes or alkyl naphthalenes, the alkylated olefin to be utilized may be a linear or branched olefin, or may be a combination of these. These production processes are described in e.g. US Patent 3,909,432.

Moreover, as the ester, fatty acid esters are preferred from the perspective of compatibility with the ethylene-α-olefin copolymer (C).

Although there are no particular limitations on the fatty acid esters, examples include fatty acid esters consisting of only carbon, oxygen or hydrogen as mentioned below, where the examples include monoesters prepared from a monobasic acid and alcohol; diesters prepared from dibasic acid and alcohol, or from a diol with a monobasic acid or an acid mixture; or polyolesters prepared by reacting a monobasic acid or an acid mixture with a diol, triol (e.g. trimethylolpropane), tetraol (e.g. pentaerythritol), hexol (e.g. dipentaerythritol) etc. Examples of these esters include ditridecyl glutarate, di-2-ethyl hexyl adipate, diisodecyl adipate, ditridecyl adipate, di-2-ethyl hexyl sebacate, tridecyl pelargonate, di-2-ethyl hexyl adipate, di-2-ethyl hexyl azelate, trimethylolpropane caprylate, trimethylolpropane pelargonate, trimethylolpropane triheptanoate, pentaerythritol-2-ethyl hexanoate, pentaerythritol pelargonate, and pentaerythritol tetraheptanoate.

From the perspective of the compatibility with the ethylene-α-olefin copolymer (C), an alcohol having two or more functional hydroxyl groups is preferred as the alcohol moiety constituting the ester, and a fatty acid having 8 or more carbon atoms is preferred as the fatty acid moiety. However, a fatty acid having 20 or fewer carbon atoms, which is easily industrially available, is superior in terms of the manufacturing cost of the fatty acid. The effect of the present invention is also sufficiently exhibited with the use of one fatty acid constituting an ester, or with the use of a fatty acid ester prepared by means of two or more acid mixtures. Examples of fatty acid esters more specifically include a mixed triester of trimethylolpropane with lauric acid and stearic acid, and diisodecyl adipate, where these are preferable in terms of compatibility of saturated hydrocarbon components such as the ethylene-α-olefin copolymer (C), with stabilizers such as antioxidants, corrosion preventing agents, anti-wear agents, friction modifying agents, pour point lowering agents, anti-rust agents and anti-foamers mentioned below and having a polar group.

In the lubricating oil composition of the present invention, ester, and a synthetic oil other than ester are preferably contained as the synthetic oil (B), which is a lubricant base oil. When utilizing a synthetic oil (B), particularly a poly-α-olefin as the lubricant base oil, it is preferable that the lubricating oil composition of the present invention contain a fatty acid ester in an amount of 5 to 20 % by mass with respect to 100 % by mass of the entire weight of the lubricating oil composition. By containing a fatty acid ester of 5 % by mass or more, good compatibility is obtainable with lubricating oil sealing material such as resins and elastomers inside the internal combustion engines and industrial machinery of all types. Specifically, swelling of the lubricating oil sealing material can be suppressed. From the perspective of oxidation stability or heat resistance, the amount of ester is preferably 20 % by mass or less. When mineral oil is contained in the lubricating oil composition, a fatty acid ester is not necessarily required, because the mineral oil *per* se has a swelling suppression effect of the lubricating oil sealing agent.

< (C) Ethylene-α-olefin copolymer >

The ethylene-α-olefin copolymer (C) is a liquid random copolymer (C) of ethylene and α-olefin prepared by the following method (α).

(Method (α))

A method (α) for preparing a liquid random copolymer of ethylene and α-olefin, comprising a step of carrying out solution polymerization of ethylene and α-olefin having 3 to 20 carbon atoms, under a catalyst system containing

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

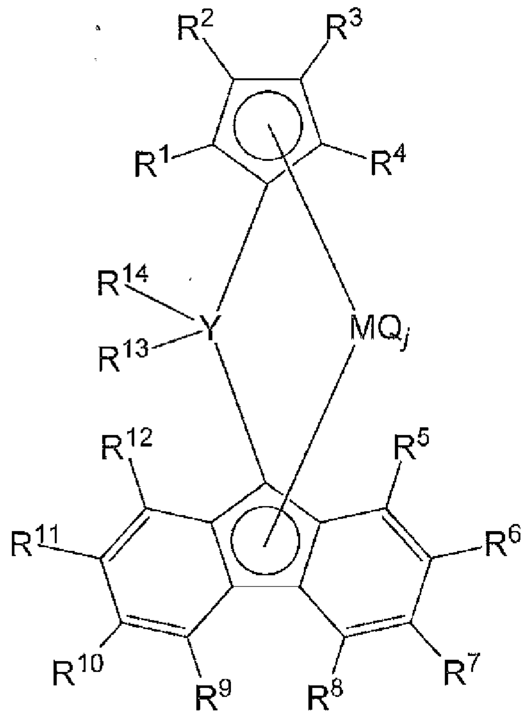

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Here, the hydrocarbon group has 1 to 20 carbon atoms, preferably 1 to 15 atoms, and more preferably 4 to 10 carbon atoms, and means for example an alkyl group, aryl group etc. The aryl group has 6 to 20 carbon atoms, and preferably 6 to 15 carbon atoms.

Examples of the silicon-containing hydrocarbon group include an alkyl or aryl group having 3 to 20 carbon atoms which contains 1 to 4 silicon atoms, and in more detail includes trimethylsilyl group, tert-butyldimethylsilyl group, triphenylsilyl group etc.

In the bridged metallocene compound represented by Formula 1, cyclopentadienyl group may be substituted or unsubstituted.

In the bridged metallocene compound represented by Formula 1,

(i) it is preferable that at least one among substituents ($R^1$, $R^2$, $R^3$ and $R^4$) bonded to cyclopentadienyl group is a hydrocarbon group,
(ii) it is more preferable that at least one among substituents ($R^1$, $R^2$, $R^3$ and $R^4$) is a hydrocarbon group having 4 or more carbon atoms,
(iii) it is most preferable that substituent ($R^2$ or $R^3$) bonded to the 3-position of the cyclopentadienyl group is a hydrocarbon group having 4 or more carbon atoms (for example an n-butyl group).

In case where at least two among $R^1$, $R^2$, $R^3$ and $R^4$ are substituents (that is, being not hydrogen atom), the

above-mentioned substituents may be the same or be different, and it is preferable that at least one substituent is a hydrocarbon group having 4 or more carbon atoms.

In the metallocene compound represented by Formula 1, $R^6$ and $R^{11}$ bonded to fluorenyl group are the same, $R^7$ and $R^{10}$ are the same, but $R^6$, $R^7$, $R^{10}$ and $R^{11}$ are not hydrogen atom at the same time. In high-temperature solution polymerization of poly-$\alpha$-olefin, in order to improve the polymerization activity, preferably neither $R^6$ nor $R^{11}$ is hydrogen atom, and more preferably none of $R^6$, $R^7$, $R^{10}$ and $R^{11}$ is hydrogen atom. For example, $R^6$ and $R^{11}$ bonded to the 2-position and 7-position of the fluorenyl group are the same hydrocarbon group having 1 to 20 carbon atoms, and preferably all tert-butyl groups, and $R^7$ and $R^{10}$ are the same hydrocarbon group having 1 to 20 carbon atoms, and preferably all tert-butyl groups.

The main chain part (bonding part, Y) connecting the cyclopentadienyl group and the fluorenyl group is a cross-linking section of two covalent bonds comprising one carbon atom or silicon atom, as a structural bridge section imparting steric rigidity to the bridged metallocene compound represented by Formula 1. Cross-linking atom (Y) in the cross-linking section has two aryl groups ($R^{13}$ and $R^{14}$) which may be the same or different. Therefore, the cyclopentadienyl group and the fluorenyl group are bonded by the covalent bond cross-linking section containing an aryl group. Examples of the aryl group include a phenyl group, naphthyl group, anthracenyl group, and a substituted aryl group (which is formed by substituting one or more aromatic hydrogen ($sp^2$-type hydrogen) of a phenyl group, naphthyl group or anthracenyl group, with substituents). Examples of substituents in the aryl group include a hydrocarbon group having 1 to 20 carbon atoms, a silicon-containing hydrocarbon group having 1 to 20 carbon atoms, a halogen atom etc., and preferably include a phenyl group. In the bridged metallocene compound represented by Formula 1, preferably $R^{13}$ and $R^{14}$ are the same in view of easy production.

In the bridged metallocene compound represented by Formula 1, Q is preferably a halogen atom or hydrocarbon group having 1 to 10 carbon atoms. The halogen atom includes fluorine, chlorine, bromine or iodine. The hydrocarbon group having 1 to 10 carbon atoms includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexyl methyl, cyclohexyl, 1-methyl-1-cyclohexyl etc. Further, when j is an integer of 2 or more, Q may be the same or different.

Examples of such bridged metallocene compounds (a) include:

ethylene [$\eta^5$-(3-tert-butyl-5-methyl cyclopentadienyl)] ($\eta^5$-fluorenyl) zirconium dichloride, ethylene [$\eta^5$-(3-tert-butyl-5-methyl cyclopentadienyl)] [$\eta^5$-(3,6-di-tert-butyl fluorenyl)] zirconium dichloride, ethylene [$\eta^5$-(3-tert-butyl-5-methyl cyclopentadienyl)] [$\eta^5$-(2,7-di-tert-butyl fluorenyl)] zirconium dichloride, ethylene [$\eta^5$-(3-tert-butyl-5-methyl cyclopentadienyl)] (octamethyl octahydrodibenzofluorenyl) zirconium dichloride, ethylene [$\eta^5$-(3-tert-butyl-5-methyl cyclopentadienyl)] (benzofluorenyl) zirconium dichloride, ethylene [$\eta^5$-(3-tert-butyl-5-methyl cyclopentadienyl)] (dibenzofluorenyl) zirconium dichloride, ethylene [$\eta^5$-(3-tert-butyl-5-methyl cyclopentadienyl)] (octahydrodibenzofluorenyl) zirconium dichloride, ethylene [$\eta^5$-(3-tert-butyl-5-methyl cyclopentadienyl)] [$\eta^5$-(2,7-diphenyl-3,6-di-tert-butyl fluorenyl)] zirconium dichloride, ethylene [$\eta^5$-(3-tert-butyl-5-methyl cyclopentadienyl)] [$\eta^5$-(2,7-dimethyl-3,6-di-tert-butyl fluorenyl)] zirconium dichloride;

ethylene [$\eta^5$-(3-tert-butyl cyclopentadienyl)] ($\eta^5$-fluorenyl) zirconium dichloride, ethylene [$\eta^5$-(3-tert-butyl cyclopentadienyl)] [$\eta^5$-(3,6-di-tert-butyl fluorenyl)] zirconium dichloride, ethylene [$\eta^5$-(3-tert-butyl cyclopentadienyl)] [$\eta^5$-(2,7-di-tert-butyl fluorenyl)] zirconium dichloride, ethylene [$\eta^5$-(3-tert-butyl cyclopentadienyl)] (octamethyl octahydrodibenzofluorenyl) zirconium dichloride, ethylene [$\eta^5$-(3-tert-butyl cyclopentadienyl)] (benzofluorenyl) zirconium dichloride, ethylene [$\eta^5$-(3-tert-butyl cyclopentadienyl)] (dibenzofluorenyl) zirconium dichloride, ethylene [$\eta^5$-(3-tert-butyl cyclopentadienyl)] (octahydrodibenzofluorenyl) zirconium dichloride, ethylene [$\eta^5$-(3-tert-butyl cyclopentadienyl)] [$\eta^5$-(2,7-diphenyl-3,6-di-tert-butyl fluorenyl)] zirconium dichloride, ethylene [$\eta^5$-(3-tert-butyl cyclopentadienyl)] [$\eta^5$-(2,7-dimethyl-3,6-di-tert-butyl fluorenyl)] zirconium dichloride;

ethylene [$\eta^5$-(3-n-butyl cyclopentadienyl)] ($\eta^5$-fluorenyl) zirconium dichloride, ethylene [$\eta^5$-(3-n-butyl cyclopentadienyl)] [$\eta^5$-(3,6-di-tert-butyl fluorenyl)] zirconium dichloride, ethylene [$\eta^5$-(3-n-butyl cyclopentadienyl)] [$\eta^5$-(2,7-di-tert-butyl fluorenyl)] zirconium dichloride, ethylene [$\eta^5$-(3-n-butyl cyclopentadienyl)] (octamethyl octahydrodibenzofluorenyl) zirconium dichloride, ethylene [$\eta^5$-(3-n-butyl cyclopentadienyl)] (benzofluorenyl) zirconium dichloride, ethylene [$\eta^5$-(3-n-butyl cyclopentadienyl)] (dibenzofluorenyl) zirconium dichloride, ethylene [$\eta^5$-(3-n-butyl cyclopentadienyl)] (octahydrodibenzofluorenyl) zirconium dichloride, ethylene [$\eta^5$-(3-n-butyl cyclopentadienyl)] [$\eta^5$-(2,7-diphenyl-3,6-di-tert-butyl fluorenyl)] zirconium dichloride, ethylene [$\eta^5$-(3-n-butyl cyclopentadienyl)] [$\eta^5$-(2,7-dimethyl-3,6-di-tert-butyl fluorenyl)] zirconium dichloride;

diphenylmethylene [$\eta^5$-(3-tert-butyl-5-methyl cyclopentadienyl)] ($\eta^5$-fluorenyl) zirconium dichloride, diphenylmethylene [$\eta^5$-(3-tert-butyl-5-methyl cyclopentadienyl)] [$\eta^5$-(3,6-di-tert-butyl fluorenyl)] zirconium dichloride, diphenylmethylene [$\eta^5$-(3-tert-butyl-5-methyl cyclopentadienyl)] [$\eta^5$-(2,7-di-tert-butyl fluorenyl)] zirconium dichloride, diphenylmethylene [$\eta^5$-(3-tert-butyl-5-methyl cyclopentadienyl)] (octamethyl octahydrodibenzofluorenyl) zirconium dichloride, diphenylmethylene [$\eta^5$-(3-tert-butyl-5-methyl cyclopentadienyl)] (benzofluorenyl) zirconium dichloride, diphe-

nylmethylene [$\eta^5$-(3-tert-butyl-5-methyl cyclopentadienyl)] (dibenzofluorenyl) zirconium dichloride, diphenylmethylene [$\eta^5$-(3-tert-butyl-5-methyl cyclopentadienyl)] (octahydrodibenzofluorenyl) zirconium dichloride, diphenylmethylene [$\eta^5$-(3-tert-butyl-5-methyl cyclopentadienyl)] [$\eta^5$-(2,7-diphenyl-3,6-di-tert-butyl fluorenyl)] zirconium dichloride, diphenylmethylene [$\eta^5$-(3-tert-butyl-5-methyl cyclopentadienyl)] [$\eta^5$-(2,7-dimethyl-3,6-di-tert-butyl fluorenyl)] zirconium dichloride;

diphenylmethylene [$\eta^5$-(3-tert-butyl cyclopentadienyl)] ($\eta^5$-fluorenyl) zirconium dichloride, diphenylmethylene [$\eta^5$-(3-tert-butyl cyclopentadienyl)] [$\eta^5$-(3,6-di-tert-butyl fluorenyl)] zirconium dichloride, diphenylmethylene [$\eta^5$-(3-tert-butyl cyclopentadienyl)] [$\eta^5$-(2,7-di-tert-butyl fluorenyl)] zirconium dichloride, diphenylmethylene [$\eta^5$-(3-tert-butyl cyclopentadienyl)] (octamethyl octahydrodibenzofluorenyl) zirconium dichloride, diphenylmethylene [$\eta^5$-(3-tert-butyl cyclopentadienyl)] (benzofluorenyl) zirconium dichloride, diphenylmethylene [$\eta^5$-(3-tert-butyl cyclopentadienyl)] (dibenzofluorenyl) zirconium dichloride, diphenylmethylene [$\eta^5$-(3-tert-butyl cyclopentadienyl)] (octahydrodibenzofluorenyl) zirconium dichloride, diphenylmethylene [$\eta^5$-(3-tert-butyl cyclopentadienyl)] [$\eta^5$-(2,7-diphenyl-3,6-di-tert-butyl fluorenyl)] zirconium dichloride, diphenylmethylene [$\eta^5$-(3-tert-butyl cyclopentadienyl)] [$\eta^5$-(2,7-dimethyl-3,6-di-tert-butyl fluorenyl)] zirconium dichloride;

diphenylmethylene [$\eta^5$-(3-n-butyl cyclopentadienyl)] ($\eta^5$-fluorenyl) zirconium dichloride, diphenylmethylene [$\eta^5$-(3-n-butyl cyclopentadienyl)] [$\eta^5$-(3,6-di-tert-butyl fluorenyl)] zirconium dichloride, diphenylmethylene [$\eta^5$-(3-n-butyl cyclopentadienyl)] [$\eta^5$-(2,7-di-tert-butyl fluorenyl)] zirconium dichloride, diphenylmethylene [$\eta^5$-(3-n-butyl cyclopentadienyl)] (octamethyl octahydrodibenzofluorenyl) zirconium dichloride, diphenylmethylene [$\eta^5$-(3-n-butyl cyclopentadienyl)] (benzofluorenyl) zirconium dichloride, diphenylmethylene [$\eta^5$-(3-n-butyl cyclopentadienyl)] (dibenzofluorenyl) zirconium dichloride, diphenylmethylene [$\eta^5$-(3-n-butyl cyclopentadienyl)] (octahydrodibenzofluorenyl) zirconium dichloride, diphenylmethylene [$\eta^5$-(3-n-butyl cyclopentadienyl)] [$\eta^5$-(2,7-diphenyl-3,6-di-tert-butyl fluorenyl)] zirconium dichloride, diphenylmethylene [$\eta^5$-(3-n-butyl cyclopentadienyl)] [$\eta^5$-(2,7-dimethyl-3,6-di-tert-butyl fluorenyl)] zirconium dichloride;

di(p-tolyl) methylene [$\eta^5$-(3-tert-butyl-5-methyl cyclopentadienyl)] ($\eta^5$-fluorenyl) zirconium dichloride, di(p-tolyl) methylene [$\eta^5$-(3-tert-butyl-5-methyl cyclopentadienyl)] [$\eta^5$-(3,6-di-tert-butyl fluorenyl)] zirconium dichloride, di(p-tolyl) methylene [$\eta^5$-(3-tert-butyl-5-methyl cyclopentadienyl)] [$\eta^5$-(2,7-di-tert-butyl fluorenyl)] zirconium dichloride, di(p-tolyl) methylene [$\eta^5$-(3-tert-butyl-5-methyl cyclopentadienyl)] (octamethyl octahydrodibenzofluorenyl) zirconium dichloride, di(p-tolyl) methylene [$\eta^5$-(3-tert-butyl-5-methyl cyclopentadienyl)] (benzofluorenyl) zirconium dichloride, di(p-tolyl) methylene [$\eta^5$-(3-tert-butyl-5-methyl cyclopentadienyl)] (dibenzofluorenyl) zirconium dichloride, di(p-tolyl) methylene [$\eta^5$-(3-tert-butyl-5-methyl cyclopentadienyl)] (octahydrodibenzofluorenyl) zirconium dichloride, di(p-tolyl) methylene [$\eta^5$-(3-tert-butyl-5-methyl cyclopentadienyl)] [$\eta^5$-(2,7-diphenyl-3,6-di-tert-butyl fluorenyl)] zirconium dichloride, di(p-tolyl) methylene [$\eta^5$-(3-tert-butyl-5-methyl cyclopentadienyl)] [$\eta^5$-(2,7-dimethyl-3,6-di-tert-butyl fluorenyl)] zirconium dichloride;

di(p-tolyl) methylene [$\eta^5$-(3-tert-butyl cyclopentadienyl)] ($\eta^5$-fluorenyl) zirconium dichloride, di(p-tolyl) methylene [$\eta^5$-(3-tert-butyl cyclopentadienyl)] [$\eta^5$-(3,6-di-tert-butyl fluorenyl)] zirconium dichloride, di(p-tolyl) methylene [$\eta^5$-(3-tert-butyl cyclopentadienyl)] [$\eta^5$-(2,7-di-tert-butyl fluorenyl)] zirconium dichloride, di(p-tolyl) methylene [$\eta^5$-(3-tert-butyl cyclopentadienyl)] (octamethyl octahydrodibenzofluorenyl) zirconium dichloride, di(p-tolyl) methylene [$\eta^5$-(3-tert-butyl cyclopentadienyl)] (benzofluorenyl) zirconium dichloride, di(p-tolyl) methylene [$\eta^5$-(3-tert-butyl cyclopentadienyl)] (dibenzofluorenyl) zirconium dichloride, di(p-tolyl) methylene [$\eta^5$-(3-tert-butyl cyclopentadienyl)] (octahydrodibenzofluorenyl) zirconium dichloride, di(p-tolyl) methylene [$\eta^5$-(3-tert-butyl cyclopentadienyl)] [$\eta^5$-(2,7-diphenyl-3,6-di-tert-butyl fluorenyl)] zirconium dichloride, di(p-tolyl) methylene [$\eta^5$-(3-tert-butyl cyclopentadienyl)] [$\eta^5$-(2,7-dimethyl-3,6-di-tert-butyl fluorenyl)] zirconium dichloride; and di(p-tolyl) methylene [$\eta^5$-(3-n-butyl cyclopentadienyl)] ($\eta^5$-fluorenyl) zirconium dichloride, di(p-tolyl) methylene [$\eta^5$-(3-n-butyl cyclopentadienyl)] [$\eta^5$-(3,6-di-tert-butyl fluorenyl)] zirconium dichloride, di(p-tolyl) methylene [$\eta^5$-(3-n-butyl cyclopentadienyl)] [$\eta^5$-(2,7-di-tert-butyl fluorenyl)] zirconium dichloride, di(p-tolyl) methylene [$\eta^5$-(3-n-butyl cyclopentadienyl)] (octamethyl octahydrodibenzofluorenyl) zirconium dichloride, di(p-tolyl) methylene [$\eta^5$-(3-n-butyl cyclopentadienyl)] (benzofluorenyl) zirconium dichloride, di(p-tolyl) methylene [$\eta^5$-(3-n-butyl cyclopentadienyl)] (dibenzofluorenyl) zirconium dichloride, di(p-tolyl) methylene [$\eta^5$-(3-n-butyl cyclopentadienyl)] (octahydrodibenzofluorenyl) zirconium dichloride, di(p-tolyl) methylene [$\eta^5$-(3-n-butyl cyclopentadienyl)] (2,7-diphenyl-3,6-di-tert-butyl fluorenyl) zirconium dichloride, di(p-tolyl) methylene [$\eta^5$-(3-n-butyl cyclopentadienyl)] [$\eta^5$-(2,7-dimethyl-3,6-di-tert-butyl fluorenyl)] zirconium dichloride.

Although compounds whose zirconium atoms were substituted with hafnium atoms, or compounds whose chloro ligands were substituted with methyl groups etc. are exemplified in these compounds, the bridged metallocene compound (a) is not limited to these exemplifications.

As the organoaluminum oxy-compound used in the catalyst system in the present invention, conventional aluminoxane can be used. For example, linear or ring type aluminoxane represented by the following Formulas 2 to 5 can be used. A small amount of organic aluminum compound may be contained in the organoaluminum oxy-compound.

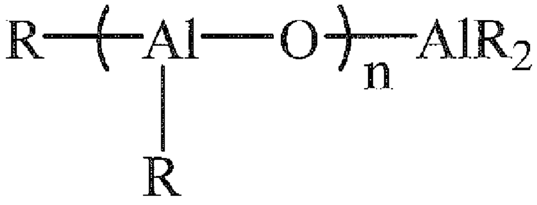

... (Formula 2)

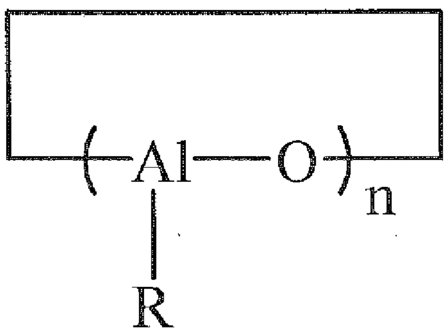

... (Formula 3)

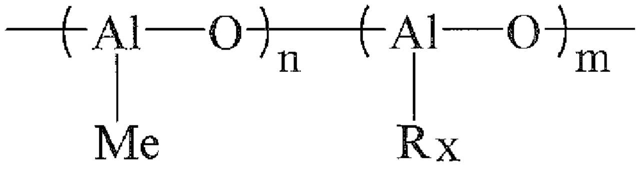

... (Formula 4)

In Formulae 2 to 4, R is independently a hydrocarbon group having 1 to 10 carbon atoms, Rx is independently a hydrocarbon group having 2 to 20 carbon atoms, m and n are independently an integer of 2 or more, preferably 3 or more, more preferably 10 to 70, and most preferably 10 to 50.

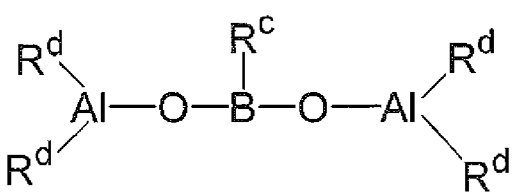

... (Formula 5)

In Formula 5, $R^c$ is a hydrocarbon group having 1 to 10 carbon atoms, and $R^d$ is independently a hydrogen atom, halogen atom or hydrocarbon group having 1 to 10 carbon atoms.

In Formula 2 or Formula 3, R is a methyl group (Me) of the organoaluminum oxy-compound which is conventionally referred to as "methylaluminoxane".

The methylaluminoxane is easily available and has high polymerization activity, and thus it is commonly used as an activator in the polyolefin polymerization. However, the methylaluminoxane is difficult to dissolve in a saturated hydrocarbon, and thus it has been used as a solution of aromatic hydrocarbon such as toluene or benzene, which is environmentally undesirable. Therefore, in recent years, a flexible body of methylaluminoxane represented by Formula 4 has been developed and used as an aluminoxane dissolved in the saturated hydrocarbon. The modified methylaluminoxane represented by Formula 4 is prepared by using a trimethyl aluminum and an alkyl aluminum other than the trimethyl aluminum as shown in US Patent 4960878 and US Patent 5041584, and for example, is prepared by using trimethyl aluminum and triisobutyl aluminum. The aluminoxane in which Rx is an isobutyl group is commercially available under the trade name of MMAO and TMAO, in the form of a saturated hydrocarbon solution. (See Tosoh Finechem Corporation, Tosoh Research & Technology Review, Vol 47, 55 (2003)).

As (ii) the compound which reacts with the bridged metallocene compound to form an ion pair (hereinafter, referred to as "ionic compound" as required) which is contained in the present catalyst system, a Lewis acid, ionic compounds, borane, borane compounds and carborane compounds can be used. These are described in patent literatures, Korean Patent No. 10-551147 A, JP H01-501950 A, JP H03-179005 A, JP H03-179006 A, JP H03-207703 A, JP H03-207704 A, US Patent 5321106 and so on. If needed, heteropoly compounds, and isopoly compound etc. can be used, and the ionic compound disclosed in JP 2004-51676 A can be used. The ionic compound may be used alone or by mixing two or more. In more detail, examples of the Lewis acid include the compound represented by $BR_3$ (R is fluoride, substituted or unsubstituted alkyl group having 1 to 20 carbon atoms (methyl group, etc.), substituted or unsubstituted aryl group having 6 to 20 carbon atoms (phenyl group, etc.), and also includes for example, trifluoro boron, triphenyl boron, tris(4-fluorophenyl) boron, tris(3,5-difluorophenyl) boron, tris(4-fluorophenyl) boron, tris(pentafluorophenyl) and boron tris(p-tolyl) boron. When the ionic compound is used, its use amount and sludge amount produced are relatively small in comparison with the organoaluminum oxy-compound, and thus it is economically advantageous. In the present invention, it is preferable that the compound represented by the following Formula 6 is used as the ionic compound.

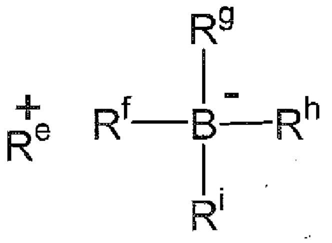

··· (Formula 6)

In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently an organic group, preferably a hydrocarbon group having 1 to 20 carbon atoms, and more preferably an aryl group, for example, a penta-fluorophenyl group. Examples of the carbenium cation include a tris(methylphenyl)carbenium cation and a tris(dimethylphenyl)carbenium cation, and examples of the ammonium cation include a dimethylanilinium cation.

Examples of compounds represented by the aforementioned Formula 6 preferably include N,N-dialkyl anilinium salts, and specifically include N,N-dimethylanilinium tetraphenylborate, N,N-dimethylanilinium tetrakis (pentafluorophenyl) borate, N,N-dimethylanilinium tetrakis (3,5-ditrifluoro methylphenyl) borate, N,N-diethyl anilinium tetraphenylborate, N,N-diethyl anilinium tetrakis (pentafluorophenyl) borate, N,N-diethyl anilinium tetrakis (3,5-ditrifluoro methylphenyl) borate, N,N-2,4,6-penta methylanilinium tetraphenylborate, and N,N-2,4,6-penta methylanilinium tetrakis (pentafluorophenyl) borate.

The catalyst system used in the present invention further includes (c) an organoaluminum compound when it is needed. The organoaluminum compound plays a role of activating the bridged metallocene compound, the organoaluminum oxy-compound, and the ionic compound, etc. As the organoaluminum compound, preferably an organoaluminum represented by the following Formula 7, and alkyl complex compounds of the Group 1 metal and aluminum represented by the following Formula 8 can be used.

$R^a_m Al(OR^b)_n H_p X_q$ ... Formula 7

In Formula 7, $R^a$ and $R^b$ each is independently a hydrocarbon group having 1 to 15 carbon atoms, preferably 1 to 4 carbon atoms, and X is a halogen atom, m is an integer of $0<m\leq3$, n is an integer of $0\leq n\leq3$, p is an integer of $0<p\leq3$, q is an integer of $0\leq q<3$, and $m+n+p+q=3$.

$M^2AlR^a_4$ ... Formula 8

In Formula 8, $M^2$ represents Li, Na or K, and $R^a$ is a hydrocarbon group having 1 to 15 carbon atoms, and preferably 1 to 4 carbon atoms.

Examples of the organoaluminum compound represented by Formula 7 include trimethyl aluminum and triisobutyl aluminum etc., which are easily available. Examples of the alkyl complex compounds of Group 1 metal and aluminum represented by Formula 8 include $LiAl(C_2H_5)_4$, $LiAl(C_7H_{15})_4$ etc. Compounds similar to the compounds represented by Formula 7 can be used. For example, like $(C_2H_5)_2AlN(C_2H_5)Al(C_2H_5)_2$, an organoaluminum compound to which at least 2 aluminum compounds are bonded through nitrogen atoms, can be used.

In the method for preparing the ethylene-α-olefin copolymer (C), the amount of (a) the bridged metallocene compound represented by Formula 1 is preferably 5 to 50% by weight with respect to total catalyst composition. Moreover, preferably the amount of (b) (i) the organoaluminum oxy-compound is 50 to 500 equivalent weight with respect to the molar number of the bridged metallocene compound to be used, the amount of (b) (ii) the compound which reacts with the bridged metallocene compound to form an ion pair is 1 to 5 equivalent weight with respect to the molar number of

bridged metallocene compound to be used, and the amount of (c) the organoaluminum compound is 5 to 100 equivalent weight with respect to the molar number of the bridged metallocene compound to be used.

The catalyst system used in the present invention may have the following [1] to [4] for example.

[1] (a) the bridged metallocene compound represented by Formula 1, and (b) (i) the organoaluminum oxy-compound.
[2] (a) the bridged metallocene compound represented by Formula 1, (b) (i) the organoaluminum oxy-compound and (c) the organoaluminum compound.
[3] (a) the bridged metallocene compound represented by Formula 1, (b) (ii) the compound which reacts with the bridged metallocene compound to form an ion pair, and (c) the organoaluminum compound.
[4] (a) the bridged metallocene compound represented by Formula 1, and (b) (i) the organoaluminum oxy-compound and (ii) the compound which reacts with the bridged metallocene compound to form an ion pair.

(a) The bridged metallocene compound represented by Formula 1 (element (a)), (b) (i) the organoaluminum oxy-compound (element (b)), (ii) the compound which reacts with the bridged metallocene compound to form an ion pair and/or (c) the organoaluminum compound (element (c)) may be introduced in any order, to a starting raw material monomer (a mixture of ethylene and α-olefin having 3 to 20 carbon atoms). For example, elements (a), (b) and/or (c) are introduced alone or in any order, to a polymerization reactor with which raw material monomer is filled. Alternatively, if required, at least two elements among (a), (b) and/or (c) are mixed and then the mixed catalyst composition is introduced to the polymerization reactor with which raw material monomer is filled.

The ethylene-α-olefin copolymer (C) is prepared by a solution polymerization of ethylene and α-olefin having 3 to 20 carbon atoms under the catalyst system. As the α-olefin having 3 to 20 carbon atoms, one or more among linear α-olefins such as propylene, 1-butene, 1-penetene, 1-hexene etc., branched α-olefins such as isobutylene, 3-methyl-1-butene, 4-methyl-1-penetene etc. and mixtures thereof can be used. Preferably, one or more α-olefins having 3 to 6 carbon atoms can be used, and more preferably, propylene can be used. The solution polymerization can be carried out by using an inert solvent such as propane, butane or hexane etc. or an olefin monomer itself as a medium. In the copolymerization of ethylene and α-olefin of the present invention, the temperature for the copolymerization is conventionally 80 to 150°C and preferably 90 to 120°C, and the pressure for the copolymerization is conventionally atmospheric pressure to 500 kgf/cm$^2$ and preferably atmospheric pressure to 50 kgf/cm$^2$, which can vary in accordance with reacting materials, reacting conditions, etc.

Batch-, semi-continuous- or continuous-type polymerization can be carried out, and continuous-type polymerization is preferably carried out.

The ethylene-α-olefin copolymer (C) is in liquid phase at room temperature, and has a structure where the α-olefin units are uniformly distributed in the copolymer chain. The ethylene-α-olefin copolymer (C) comprises e.g. 60 to 40 mol %, preferably 45 to 55 mol %, of ethylene units derived from ethylene, and further comprises e.g. 40 to 60 mol %, preferably 45 to 55 mol %, of α-olefin units having 3 to 20 carbon atoms which are derived from α-olefin having 3 to 20 carbon atoms.

The number average molecular weight (Mn) of the ethylene-α-olefin copolymer (C) is e.g. 500 to 10,000 and preferably 800 to 6,000, and the molecular weight distribution (Mw/Mn, Mw is weight average molecular weight) is e.g. 3 or less and preferably 2 or less. The number average molecular weight (Mn) and the molecular weight distribution (Mw/Mn) are measured by gel permeation chromatography (GPC).

The ethylene-α-olefin copolymer (C) has a kinematic viscosity at 100°C of e.g. 30 to 5,000 and preferably 50 to 3,000 mm$^2$/s, a pour point of e.g. 30 to -45°C and preferably 20 to -35 °C, and a Bromine Number of 0.1 / 100 g or less.

In the bridged metallocene compound represented by Formula 1, the polymerization activity is particularly high with respect to the copolymerization of ethylene with α-olefin. Utilizing this bridged metallocene compound selectively stops polymerization by hydrogen introduction at the molecular terminals, and thus there is little unsaturated bonding of the resulting ethylene-α-olefin copolymer (C). Moreover, since the ethylene-α-olefin copolymer (C) has a high random copolymerization, it has a controlled molecular weight distribution, and thus has excellent shear stability and viscosity properties. Therefore, it is considered that the lubricating oil composition for automobile gears of the present invention containing the ethylene-α-olefin copolymer (C) has excellent shear stability, temperature viscosity properties and low-temperature viscosity properties with balance at a high level, and further has excellent thermal and oxidation stability.

< Lubricating oil composition for automobile gears >

The lubricating oil composition for automobile gears according to the present invention contains the lubricant base oil consisting of the mineral oil (A) and/or the synthetic oil (B), and also contains the ethylene-α-olefin copolymer (C).

The lubricating oil composition for automobile gears according to the present invention has a kinematic viscosity

at 100°C of 7 to 30 $mm^2/s$. The value of this kinematic viscosity is that when measured according to the method described in JIS K2283. If the kinematic viscosity at 100°C of the lubricating oil composition for automobile gears is much more than 30 $mm^2/s$, the oil film retention performance of the lubricating oil *per* se improves, and thus the effect obtainable by the present invention is not sufficiently exhibited, and moreover, fuel efficiency performance worsens. If the kinematic viscosity at 100°C is much less than 7 $mm^2/s$, the oil film retention performance is insufficient, and there is increased possibility that metal contact between the gears may occur. The kinematic viscosity at 100°C is preferably 9 to 30 $mm^2/s$, and more preferably 11 to 27 $mm^2/s$. Within this range, a high fuel efficiency performance and a remarkably excellent shear stability are obtainable.

In the lubricating oil composition for automobile gears of the present invention, there is no particular limitation on the mixing ratio of the lubricant base oil consisting of the mineral oil (A) and/or the synthetic oil (B) and the ethylene-$\alpha$-olefin copolymer (C) if the required properties in the objective uses are satisfied. However, normally, the mass ratio of the lubricant base oil and the ethylene-$\alpha$-olefin copolymer (C) (i.e. mass of lubricant base oil / mass of copolymer (C)) is 99/1 to 50/50.

Moreover, additives such as extreme pressure agents, detergent dispersants, viscosity index improving agents, antioxidants, corrosion preventing agents, anti-wear agents, friction modifying agents, pour point lowering agents, anti-rust agents and anti-foamers may be contained in the lubricating oil composition for automobile gears of the present invention.

Below are exemplifications of additives which can be utilized in the lubricating oil composition of the present invention, where these can be used alone, or used in combination of two or more.

The extreme pressure agent is the generic name for agents having a seizure preventing effect when automobile gears are exposed to a high load condition, and although there are no particular limitations on the agent, sulfurbased extreme pressure agents such as sulfides, sulfoxides, sulfones, thiophosphinates, thiocarbonates, sulfurized oils and sulfurized olefins; phosphoric acids such as phosphate esters, phosphite esters, phosphate ester amine salts, and phosphite ester amines; and halogen-based compounds such as chlorinated hydrocarbons can be exemplified. Moreover, two or more types of these compounds may be used together.

Until extreme pressure lubricating conditions are attained, hydrocarbon or other organic components constituting lubricating oil composition may become carbonized before reaching extreme pressure lubricating conditions due to heating or shearing, and thus there is a possibility that a carbide film could be formed on a metal surface. Therefore, with the use of the extreme pressure agent alone, contact of a metal surface with the extreme pressure agent could be inhibited due to the carbide film, and thus a possibility that a sufficient effect of the extreme pressure agent cannot be expected.

Although the extreme pressure agents may be added alone, because a saturated hydrocarbon such as the copolymer constitutes a main component in the gear oil for automobiles in the present invention, from the perspective of dispersibility, it is preferable to add the agent to the lubricant base oil such as mineral oil or synthetic hydrocarbon oil, together with the other additives to be used, in a dissolved state beforehand. Specifically, more preferable is a method of selecting the so-called extreme pressure agent package to be added to the lubricating oil composition, in which the various components such as the extreme pressure agent components are mixed in advance, and further dissolved in the lubricant base oil such as mineral oil or synthetic hydrocarbon oil.

Preferred extreme pressure agents (package) include Anglamol-98A (made by LUBRIZOL), Anglamol-6043 (made by LUBRIZOL), HITEC 1532 (made by AFTON CHEMICAL), HITEC 307 (made by AFTON CHEMICAL), HITEC 3339 (made by AFTON CHEMICAL), and Additin RC 9410 (made by RHEIN CHEMIE).

The extreme pressure agents may be used as required in a range of 0 to 10 % by mass, to 100 % by mass of the lubricating oil composition.

Exemplifications of the detergent dispersants include metal sulfonates, metal phenates, metal phosphonates, and imide succinate. The detergent dispersants may be used as required in a range of 0 to 15 % by mass with respect to 100 % by mass of the lubricating oil composition.

In addition to ethylene-$\alpha$-olefin copolymers (excluding the ethylene-$\alpha$-olefin copolymer (C)), known viscosity index improving agents such as olefin copolymers whose molecular weights exceed 50,000, methacrylate-based copolymers and liquid polybutene can be used together as the viscosity index improving agent. The viscosity index improving agents may be used as required in a range of 0 to 50 % by mass with respect to 100 % by mass of the lubricating oil composition.

Exemplifications of the anti-wear agent include inorganic or organic molybdenum compounds such as molybdenum disulfide, graphite, antimony sulfide, and polytetrafluoroethylene. The anti-wear agents may be used as required in a range of 0 to 3 % by mass with respect to 100 % by mass of the lubricating oil composition.

Exemplifications of the friction modifying agent include amine compounds, imide compound, fatty acid esters, fatty acid amides, and fatty acid metal salts having at least one alkyl group or alkenyl group having 6 to 30 carbon atoms, particularly linear alkyl groups or linear alkenyl groups having 6 to 30 carbon atoms, in a molecule.

Exemplifications of the amine compound include a linear- or branched-, preferably linear-, aliphatic monoamine,

or a linear- or branched-, preferably linear-, aliphatic polyamine having 6 to 30 carbon atoms, or alkylene oxide adducts of these aliphatic amines. Examples of the imide compound include imide succinate with linear- or branched- alkyl group or alkenyl group having 6 to 30 carbon atoms and/or compounds thereof modified by a carboxylic acid, boric acid, phosphoric acid, sulfuric acid etc.

Exemplifications of the fatty acid ester include esters of a linear- or branched-, preferably linear-, fatty acid having 7 to 31 carbon atoms with an aliphatic monohydric alcohol or aliphatic polyhydric alcohol. Exemplifications of the fatty acid amide include amides of a linear- or branched-, preferably linear-, fatty acid having 7 to 31 carbon atoms with an aliphatic monoamine or aliphatic polyamine. Examples of fatty acid metal salts include alkaline-earth metal salts (e.g. magnesium salts and calcium salts) and zinc salts of a linear- or branched-, preferably linear-, fatty acid having 7 to 31 carbon atoms.

The friction modifying agents may be used as required in a range of 0 to 5.0 % by mass with respect to 100 % by mass of the lubricating oil composition.

Examples of the antioxidant include phenol-based or amine-based compounds such as 2,6-di-t-butyl-4-methylphenol. The antioxidants may be used as required in a range of 0 to 3 % by mass with respect to 100 % by mass of the lubricating oil composition.

Examples of the corrosion preventing agent include compounds such as benzotriazole, benzoimidazole, and thiadiazole. The corrosion preventing agent may be used as required in a range of 0 to 3 % by mass with respect to 100 % by mass of the grease composition.

Examples of the anti-rust agent include compounds such as amine compounds, carboxylic acid metal salts, polyhydric alcohol esters, phosphorus compounds, and sulfonates. The anti-rust agent may be used as required in a range of 0 to 3 % by mass with respect to 100 % by mass of the lubricating oil composition.

Exemplifications of the anti-foamer include siliconebased compounds such as dimethyl siloxane and silica gel dispersions, and alcohol- or ester-based compounds. The antifoamer may be used as required in a range of 0 to 0.2 % by mass with respect to 100 % by mass of the lubricating oil composition.

A variety of known pour point lowering agents may be used as the pour point lowering agent. Specifically, high molecular compounds containing an organic acid ester group may be used, and in particular, vinyl polymers containing an organic acid ester group are suitably used. Examples of the vinyl polymers containing an organic acid ester group include (co)polymers of methacrylic acid alkyl, (co)polymers of acrylic acid alkyl, (co)polymers of fumaric acid alkyl, (co)polymers of maleic acid alkyl, and alkylated naphthalene.

Such pour point lowering agents have a melting point of -13°C or lower, preferably -15°C, and furthermore preferably -17°C or lower. The melting point of the pour point lowering agent is measured by means of differential scanning calorimetry (DSC). Specifically, a sample of about 5 mg is packed into an aluminum pan and temperature is raised to 200°C, where the temperature is maintained at 200°C for 5 minutes. This is then cooled at 10°C/minute until reaching - 40°C, where the temperature is maintained at -40°C for 5 minutes. The temperature is then raised at 10°C/minute during which the melting point is obtained from the heat absorption curve.

The pour point lowering agent has a polystyrene conversion weight average molecular weight obtainable by gel permeation chromatography in the range of 20,000 to 400,000, preferably 30,000 to 300,000, more preferably 40,000 to 200,000.

A pour point lowering agent may be used as required in a range of 0 to 2 % by mass with respect to 100 % by mass of the lubricating oil composition.

In addition to the aforementioned additives, antiemulsifying agents, coloring agents, oiliness agents (oiliness improving agents) and the like may also be used as required.

< Use >

The lubricating oil composition of the present invention can be suitably utilized in gear oil for automobiles such as differential gear oil or manual transmission oil. This composition has remarkably excellent shear stability and low-temperature viscosity properties, and can greatly contribute to automobile fuel efficiency performance. In particular, the lubricating oil composition of the present invention is remarkably useful as differential gear oil for large automobiles in which huge loads occur in the differential gears.

Examples

The present invention is further specifically explained based on the below Examples. However, the present invention is not limited to these Examples.

[Evaluation method]

In the below Examples and Comparative Examples etc., the physical properties etc. of the ethylene-α-olefin copolymer and the lubricating oil composition for automobile gear oil were measured by the below methods.

< Ethylene content (mol %) >

Using a Fourier transform infrared spectrometer FT/IR-610 or FT/IR-6100 (made by JASCO), the absorbance ratio of the absorption in the vicinity of 721 $cm^{-1}$ based on the horizontal vibration of the long chain methylene group, and the absorption in the vicinity of 1155 $cm^{-1}$ based on the skeletal vibration of propylene (D1155 $cm^{-1}$ / D721 $cm^{-1}$) was calculated, and the ethylene content (% by weight) was obtained by the calibration curve created beforehand (created using the ASTM D3900 reference sample). Using the ethylene content (% by weight) thus obtained, the ethylene content (mol %) was obtained according to the following Formula.

$$\text{Ethylene content (mol\%)} = \frac{[\text{ethylene content (\% by weight)} / 28]}{[\text{ethylene content (\% by weight)} / 28] + [\text{propylene content (\% by weight)} / 42]}$$

< B-value >

Employing o-dichloro benzene / benzene-$d_6$ (4/1 [vol/vol %]) as a measurement solvent, the $^{13}C$-NMR spectrum was measured under the measuring conditions (100 MHz, ECX 400P, made by JEOL Ltd) of temperature of 120°C, spectral width of 250 ppm, pulse repeating time of 5.5 seconds, and a pulse width of 4.7 μsec (45° pulse), or under the measuring conditions (125 MHz, AVANCE III Cryo-500 made by Bruker Biospin Inc) of temperature of 120°C, spectral width of 250 ppm, pulse repeating time of 5.5 seconds, and a pulse width of 5.0 μsec (45° pulse), and the B-value was calculated based on the following Formula [1].

$$B = \frac{P_{OE}}{2P_O \cdot P_E} \quad \cdots [1]$$

In Formula [1], $P_E$ indicates the molar fraction contained in the ethylene component, Po indicates the molar fraction contained in the α-olefin component, and $P_{OE}$ indicates the molar fraction of the ethylene-α-olefin sequences of all dyad sequences.

< Molecular weight distribution >

Employing the HLC-8320 GPC (gel permeation chromatography) device produced by Tosoh Corporation, the molecular weight distribution was measured as below. Four TSK gel Super Multipore HZ-M columns were used as separation columns, the column temperature was 40°C, tetrahydrofuran (made by Wako Pure Chemical Industries) was used as the mobile phase, with a development rate of 0.35 ml/minute, a sample concentration of 5.5 g/L, a sample injection amount of 20 microliters, and a differential refractometer was used as a detector. PStQuick MP-M; made by Tosoh Corporation) was used as the reference polystyrene. In accordance with general-purpose calibration procedures, weight average molecular weight (Mw) and number average molecular weight (Mn) were calculated in terms of polystyrene molecular weight, and the molecular weight distribution (Mw/Mn) was calculated from those values.

< Viscosity properties >

The 100°C kinematic viscosity and the viscosity index was measured and calculated by the method described in JIS K2283.

< Pour point >

The pour point was measured by the method described in ASTM D97. Pour points lower than -60°C were

described as -60°C or lower.

< Shear test >

A lubricating oil composition was sheared under shear conditions of a test time of 20 hours, a test temperature of 60°C, and a bearing rotation number of 1,450 rpm using a KPL shear tester in accordance with a method described in CRC L-45-T-93. The 100°C kinematic viscosity reduction rate (shear test viscosity reduction rate) due to the shearing represented by the following formula was evaluated.

Shear test viscosity reduction rate (%) = (100°C kinematic viscosity before shearing - 100°C kinematic viscosity after shearing) / 100°C kinematic viscosity before shearing × 100

< -26°C viscosity and -40°C viscosity >

Low-temperature viscosity properties were conducted in accordance with ASTM D2983, and the -40°C viscosity was measured respectively for -26°C and -40°C with a Brookfield viscometer.

< Thermal and oxidation stability >

Regarding thermal and oxidation stability, a test was conducted in accordance with the Oxidation Stability Test of Lubricating Oil for Internal Combustion Engines (ISOT) method described in JIS K2514, and the lacquer rating was evaluated 72 hours after the test time.

[Production of ethylene-α-olefin copolymer (C)]

Ethylene-α-olefin copolymers (C) were prepared in accordance with the Polymerization Examples below.

[Polymerization Example 1]

760 ml of heptane and 120 g of propylene were charged into a stainless steel autoclave with a volume of 2 L sufficiently substituted with nitrogen, and the temperature in the system was raised to 150°C, and then 0.85 MPa of hydrogen and 0.19 MPa of ethylene were supplied to raise the total pressure to 3 MPaG. Then, 0.4 mmol of triisobutyl aluminum, 0.0002 mmol of diphenylmethylene [$\eta^5$-(3-n-butyl cyclopentadienyl)] [$\eta^5$-(2,7-di-tert-butyl fluorenyl)] zirconium dichloride, and 0.002 mmol of N,N-dimethylanilinium tetrakis (pentafluorophenyl) borate were injected with nitrogen, and polymerization was started by stirring with a rotation of 400 rpm. Ethylene was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried at 80°C under reduced pressure for 10 hours. The resulting polymer had an ethylene content of 49.5 mol %, an Mw of 5,100, an Mw/Mn of 1.7, a B-value of 1.2, and a 100°C kinematic viscosity of 150 $mm^2/s$ .

[Polymerization Example 2]

710 mL of heptane and 145 g of propylene were charged into a stainless steel autoclave with a volume of 2L sufficiently substituted with nitrogen, and the temperature in the system was raised to 150°C, and then 0.40 MPa of hydrogen and 0.27 MPa of ethylene were supplied to raise the total pressure to 3 MPaG. Then, 0.4 mmol of triisobutyl aluminum, 0.0001 mmol of diphenylmethylene [$\eta^5$-(3-n-butyl cyclopentadienyl)] [$\eta^5$-(2,7-di-tert-butyl fluorenyl)] zirconium dichloride, and 0.001 mmol of N,N-dimethylanilinium tetrakis (pentafluorophenyl) borate were injected with nitrogen, and polymerization was started by stirring with a rotation of 400 rpm. Ethylene only was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried overnight at 80°C under reduced pressure to obtain 52.2 g of an ethylene-propylene copolymer. The resulting polymer had an ethylene content of 52.9 mol %, an Mw of 8,600, an Mw/Mn of 1.8, a B-value of 1.2, and a 100°C kinematic viscosity of 600 $mm^2/s$.

[Polymerization Example 3]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into the polymerization vessel, and 0.023 mmol of N,N-dimethylanilinium tetrakis (pentafluorophenyl) borate and 0.00230 mmol of diphenylmethylene [$\eta^5$-(3-n-butyl cyclopentadienyl)] [$\eta^5$-(2,7-di-tert-butyl fluorenyl)] zirconium dichloride, which were pre-mixed in toluene for 15 minutes or more, were charged into the polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The resulting polymer had an ethylene content of 52.4 mol %, an Mw of 13,600, an Mw/Mn of 1.9, a B-value of 1.2, and a 100°C kinematic viscosity of 2,000 $mm^2/s$.

[Polymerization Example 4]

760 ml of heptane and 120 g of propylene were charged into a stainless steel autoclave with a volume of 2 L sufficiently substituted with nitrogen, and the temperature in the system was raised to 150°C, and then 0.85 MPa of hydrogen and 0.19 MPa of ethylene were supplied to raise the total pressure to 3 MPaG. Then, 0.4 mmol of triisobutyl aluminum, 0.0002 mmol of dimethylsilyl bis(indenyl) zirconium dichloride, and 0.059 mmol of MMAO were injected with nitrogen, and polymerization was started by stirring with a rotation of 400 rpm. Ethylene was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried at 80°C under reduced pressure for 10 hours. The resulting polymer had an ethylene content of 48.5 mol %, an Mw of 5,000, an Mw/Mn of 1.8, a B-value of 1.2, and a 100°C kinematic viscosity of 150 $mm^2/s$ .

[Polymerization Example 5]

710 mL of heptane and 145 g of propylene were charged into a stainless steel autoclave with a volume of 2L sufficiently substituted with nitrogen, and the temperature in the system was raised to 150°C, and then 0.40 MPa of hydrogen and 0.27 MPa of ethylene were supplied to raise the total pressure to 3 MPaG. Then, 0.4 mmol of triisobutyl aluminum, 0.0001 mmol of dimethylsilyl bis(indenyl) zirconium dichloride, and 0.029 mmol of MMAO were injected with nitrogen, and polymerization was started by stirring with a rotation of 400 rpm. Ethylene only was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried overnight at 80°C under reduced pressure to obtain 52.2 g of an ethylene-propylene copolymer. The resulting polymer had an ethylene content of 53.3 mol %, an Mw of 8,500, a Mw/Mn of 1.9, a B-value of 1.2, and a 100°C kinematic viscosity was 600 $mm^2/s$.

[Polymerization Example 6]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into a polymerization vessel, and 0.688 mmol of MMAO and 0.00230 mmol of dimethylsilyl bis(indenyl) zirconium dichloride, which were pre-mixed in toluene for 15 minutes or more, were charged into a polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of

distilled water, dried with magnesium sulfate, and the solvent was then distilled off under reduced pressure. The resulting polymer was dried overnight at 80°C under reduced pressure to obtain 1.43 g of an ethylene-propylene copolymer. The resulting polymer had an ethylene content of 52.1 mol %, an Mw of 13,800, an Mw/Mn of 2.0, a B-value of 1.2, and a 100°C kinematic viscosity of 2,000 $mm^2/s$.

The copolymer obtained by Polymerization Example 1, the copolymer obtained by Polymerization Example 2, the copolymer obtained by Polymerization Example 3, the copolymer obtained by Polymerization Example 4, and the copolymer obtained by Polymerization Example 5, are respectively described below as Polymer 1, Polymer 2, Polymer 3, Polymer 4 and Polymer 5.

[Preparation of lubricating oil composition for automobile gears]

The components used other than the ethylene-α-olefin copolymer (C) in the preparation of the below lubricating oil compositions are as follows.

Lubricant base oil;

API (American Petroleum Institute) Group III mineral oil with a 100°C kinematic viscosity of 4.2 $mm^2/s$, a viscosity index of 122, and a pour point of -15°C (Yubase-4; made by SK Lubricants, mineral oil-A),
**[0121]** Synthetic oil poly-α-olefin with a 100°C kinematic viscosity of 5.8 $mm^2/s$, a viscosity index of 138, and a pour point of -60°C or lower (NEXBASE 2006; made by Neste, synthetic oil-A), and
Diisodecyl adipate, a fatty acid ester with a 100°C kinematic viscosity of 3.7 $mm^2/s$, a viscosity index of 156, and a pour point of -60°C or lower (made by Daihachi Chemical Industry Co. Ltd., synthetic oil-B).

Extreme pressure agent package;

Anglamol-98A made by Lubrizol (EP)

Pour point lowering agent;

IRGAFLO 720P made by BASF (PPD)

Polymethacrylate;

High molecular weight polymethacrylate with a Mw of appx. 41,800 (Viscoplex 0-220 made by Evonik Industries, PMA-A)

Polybutene;

High molecular weight liquid polybutene with a Mw of appx. 8,300 (Nisseki Polybutene HV-1900 made by JX Nippon Oil & Energy Corporation, PIB).

< Lubricating oil composition for automobile gears / 75W-90 >

In Examples 1 to 5, and Comparative Examples 1 to 4, the compositions were mixed with the blend ratios shown in Table 3, and adjusted so that the 100°C kinematic viscosity (100°C kinematic viscosity prior to the shear test) was appx. 13.5 to 15.0 $mm^2/s$, in conformance to the gear oil viscosity standard 75W-90 according to the Society of Automobile Engineers (SAE). The resulting lubricating oil properties of the lubricating oil compositions are shown together in Table 3.

[Example 1]

Mineral oil-A, which is the mineral oil (A), was used as the lubricant base oil, and the copolymer obtained in Polymerization Example 1 (Polymer 1) was used as the ethylene-α-olefin copolymer (C). These were mixed together with an extreme pressure agent package and a pour point lowering agent, and adjusted to 100 % by mass, thereby preparing a lubricating oil composition for automobile gear oil. The addition amounts (in % by mass) of the respective components are as shown in Table 3.

[Examples 2 to 5, Comparative Examples 1 to 4]

Except for changing the types of components and addition amounts to those as described in Table 3, the lubricating oil compositions were prepared in the same way as in Example 1.

Table 3

| | | Ex. 1 | Ex. 2 | Ex. 3 | Ex. 4 | Ex. 5 | Comp. ex. 1 | Comp. ex. 2 | Comp. ex. 3 | Comp. ex. 4 |
|---|---|---|---|---|---|---|---|---|---|---|
| Polymer 1 | % by mass | 28.0 | | | | | | | | |
| Polymer 2 | % by mass | | 18.0 | | 14.0 | | | | | |
| Polymer 3 | % by mass | | | 13.0 | | 11.0 | | | | |
| Polymer 4 | % by mass | | | | | | 28.0 | | | |
| Polymer 5 | % by mass | | | | | | | 18.0 | | |
| PMA-A | % by mass | | | | | | | | 18.5 | |
| PIB | % by mass | | | | | | | | | 20.0 |
| Mineral oil - A | % by mass | 65.0 | 75.0 | 80.0 | | | 65.0 | 75.0 | | 73.0 |
| Synthetic oil - A | % by mass | | | | 64.0 | 68.0 | | | 60.0 | |
| Synthetic oil - B | % by mass | | | | 15.0 | 15.0 | | | 15.0 | |
| EP | % by mass | 6.5 | 6.5 | 6.5 | 6.5 | 6.5 | 6.5 | 6.5 | 6.5 | 6.5 |
| PPD | % by mass | 0.5 | 0.5 | 0.5 | | | 0.5 | 0.5 | | 0.5 |
| 100°C kinematic viscosity | $mm^2/s$ | 14.9 | 15.0 | 15.0 | 13.7 | 14.7 | 14.9 | 14.9 | 14.0 | 14.2 |
| Viscosity index | - | 159 | 170 | 174 | 166 | 175 | 159 | 170 | 198 | 153 |

(continued)

| | | Ex. 1 | Ex. 2 | Ex. 3 | Ex. 4 | Ex. 5 | Comp. ex. 1 | Comp. ex. 2 | Comp. ex. 3 | Comp. ex. 4 |
|---|---|---|---|---|---|---|---|---|---|---|
| -40°C viscosity | mPa·s | 100,000 | 88,000 | 82,000 | 30,000 | 29,000 | 100,000 | 88,000 | 17,000 | >150,000 |
| Shear test viscosity reduction rate | % | <1.0 | 5 | 8 | 1 | 7 | <1.0 | 5 | 30 | 2 |
| ISOT | Lacquer rating | Adhered substance (medium) | Adhered substance (medium) | Adhered substance (medium) | Adhered substance (thin) | Adhered substance (thin) | Adhered substance (thick) | Adhered substance (thick) | Adhered substance (thick) | Adhered substance (medium) |

This viscosity standard is that suitably utilized in differential gear oil for regular automobiles and large automobiles, as well as for manual transmission oil for trucks and buses etc.

< Lubricating oil composition for automobile gears / 80W-140, 75W-140>

In Examples 6 to 10, the compositions were mixed with the blend ratios shown in Table 4, and adjusted so that the 100°C kinematic viscosity was appx. 24 to 26 $mm^2/s$, in conformance to the gear oil viscosity standards 80W-140 and 75W-140 according to the SAE. The resulting lubricating oil properties of the lubricating oil compositions are shown together in Table 4.

[Example 6]

Mineral oil-A, which is the mineral oil (A), is used as the lubricant base oil, and Polymer 1 was used as the ethylene-α-olefin copolymer (C). These were mixed together with an extreme pressure agent package and a pour point lowering agent, and adjusted to 100 % by mass, thereby preparing a lubricating oil composition for automobile gear oil. The addition amounts (in % by mass) of the respective components are as shown in Table 4.

[Examples 7 to 10]

Except for changing the types of components and the addition amounts to those as described in Table 4, the lubricating oil compositions were prepared in the same way as in Example 6.

Table 4

| | | Example 6 | Example 7 | Example 8 | Example 9 | Example 10 |
|---|---|---|---|---|---|---|
| Polymer 1 | % by mass | 43.0 | | | | |
| Polymer 2 | % by mass | | 27.0 | | 27.5 | |
| Polymer 3 | % by mass | | | 21.0 | | 21.0 |
| Mineral oil - A | % by mass | 50.0 | 66.0 | 72.0 | | |
| Synthetic oil - A | % by mass | | | | 53.0 | 58.0 |
| Synthetic oil - B | % by mass | | | | 13.0 | 14.5 |
| EP | % by mass | 6.5 | 6.5 | 6.5 | 6.5 | 6.5 |
| PPD | % by mass | 0.5 | 0.5 | 0.5 | | |
| 100°C kinematic viscosity | $mm^2/s$ | 26.0 | 25.2 | 27.2 | 24.0 | 24.3 |
| Viscosity index | - | 163 | 175 | 183 | 181 | 189 |
| -26°C viscosity | mPa·s | 35,000 | 25,000 | 25,000 | - | - |
| -40°C viscosity | mPa·s | >150,000 | >150,000 | >150,000 | 86,000 | 65,000 |
| Shear test viscosity reduction rate | % | <1.0 | 6 | 15 | 6 | 15 |

(continued)

| | | Example 6 | Example 7 | Example 8 | Example 9 | Example 10 |
|---|---|---|---|---|---|---|
| ISOT | Lacquer rating | Adhered substance (medium) | Adhered substance (medium) | Adhered substance (medium) | Adhered substance (thin) | Adhered substance (thin) |

This viscosity standard is that suitably utilized in differential gear oil for large vehicles, differential gear oil for heavy machinery and construction machinery, as well as oil for manual transmissions etc.

## Claims

**1.** A lubricating oil composition for automobile gears, comprising a lubricant base oil, and a liquid random copolymer (C) of ethylene and α-olefin, the liquid random copolymer (C) being prepared by the below method (α), and the lubricating oil composition having a kinematic viscosity at 100°C of 7 to 30 $mm^2/s$,
wherein the lubricant base oil consists of a mineral oil (A) having the properties of the below (A1) to (A3), and/or a synthetic oil (B) having the properties of the below (B1) to (B3).

(A1) The mineral oil has a kinematic viscosity at 100°C of 2 to 10 $mm^2/s$.
(A2) The mineral oil has a viscosity index of 105 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower. (Method (α))

A method (α) for preparing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

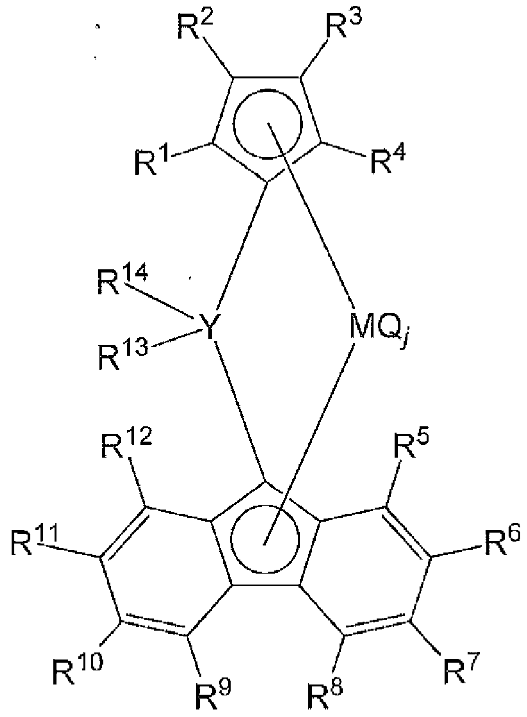

... (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

2. A lubricating oil composition for automobile gears according to Claim 1, wherein in the metallocene compound represented by the above Formula 1, at least one among substituents ($R^1$, $R^2$, $R^3$ and $R^4$) bonded to a cyclopentadienyl group, is a hydrocarbon group having 4 or more carbon atoms.

3. A lubricating oil composition for automobile gears according to Claim 1 or 2, wherein $R^6$ and $R^{11}$, being the same, are hydrocarbon groups having 1 to 20 carbon atoms.

4. A lubricating oil composition for automobile gears according to any one of Claims 1 to 3, wherein in the metallocene compound represented by the above Formula 1, substituent ($R^2$ or $R^3$) bonded to the 3-position of the cyclopentadienyl group is a hydrocarbon group.

5. A lubricating oil composition for automobile gears according to Claim 4, wherein in the metallocene compound represented by the above Formula 1, the hydrocarbon group ($R^2$ or $R^3$) bonded to the 3-position of the cyclopentadienyl group is an n-butyl group.

6. A lubricating oil composition for automobile gears according to any one of Claims 1 to 5, wherein in the metallocene compound represented by the above Formula 1, the hydrocarbon groups ($R^6$ and $R^{11}$) bonded to the 2-position and 7-position of the fluorenyl group are all tert-butyl groups.

**7.** A lubricating oil composition for automobile gears according to any one of Claims 1 to 6, wherein the compound which reacts with the bridged metallocene compound to form an ion pair is a compound represented by the following Formula 6.

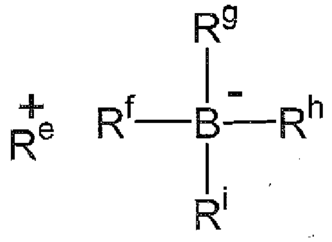

··· (Formula 6)

[In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.]

**8.** A lubricating oil composition for automobile gears according to Claim 7, wherein the ammonium cation is a dimethylanilinium cation.

**9.** A lubricating oil composition for automobile gears according to Claim 7 or 8, wherein the catalyst system further comprises an organoaluminum compound selected from a group consisting of trimethyl aluminum and triisobutyl aluminum.

**10.** A lubricating oil composition for automobile gears according to any one of Claims 1 to 9, wherein the $\alpha$-olefin of the liquid random copolymer (C) is propylene.

**11.** A lubricating oil composition for automobile gears according to any one of Claims 1 to 10, wherein the synthetic oil (B) contains an ester, and a synthetic oil other than ester.

**12.** A lubricating oil composition for automobile gears, comprising a lubricant base oil, and a liquid random copolymer of ethylene and $\alpha$-olefin, the liquid random copolymer having the properties of the below (C1) to (C5), and the lubricating oil composition having a kinematic viscosity at 100°C of 7 to 30 $mm^2/s$,
wherein the lubricant base oil consists of a mineral oil (A) having the properties of the below (A1) to (A3), and/or a synthetic oil (B) having the properties of the below (B1) to (B3).

(A1) The mineral oil has a kinematic viscosity at 100°C of 2 to 10 $mm^2/s$.
(A2) The mineral oil has a viscosity index of 105 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower.
(C1) The liquid random copolymer comprises 40 to 60 mol % of ethylene units and 60 to 40 mol % of $\alpha$-olefin units having 3 to 20 carbon atoms.
(C2) The liquid random copolymer has a number average molecular weight (Mn) of 500 to 10,000 and a molecular weight distribution (Mw/Mn, Mw is the weight average molecular weight) of 3 or less, as measured by Gel Permeation Chromatography (GPC).
(C3) The liquid random copolymer has a kinematic viscosity at 100°C of 30 to 5,000 $mm^2/s$.
(C4) The liquid random copolymer has a pour point of 30 to - 45°C.
(C5) The liquid random copolymer has a Bromine Number of 0.1 / 100 g or less.

**13.** A differential gear oil for large automobiles, consisting of the lubricating oil composition for automobile gears according to any one of Claims 1 to 12.

**14.** A method for producing a lubricating oil composition for automobile gears, comprising the steps of:

preparing a liquid random copolymer (C) of ethylene and $\alpha$-olefin by the following method ($\alpha$); and
preparing a lubricating oil composition for automobile gears by mixing a lubricant base oil and the liquid random

copolymer (C), the composition having a kinematic viscosity at 100°C of 7 to 30 $mm^2/s$,
wherein the lubricant base oil consists of a mineral oil (A) having the properties of the below (A1) to (A3), and/or a synthetic oil (B) having the properties of the below (B1) to (B3).
(A1) The mineral oil has a kinematic viscosity at 100°C of 2 to 10 $mm^2/s$.
(A2) The mineral oil has a viscosity index of 105 or more. (A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more. (B3) The synthetic oil has a pour point of -30°C or lower. (Method ($\alpha$))

A method ($\alpha$) for preparing a liquid random copolymer of ethylene and $\alpha$-olefin, comprising a step of carrying out solution polymerization of ethylene and $\alpha$-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

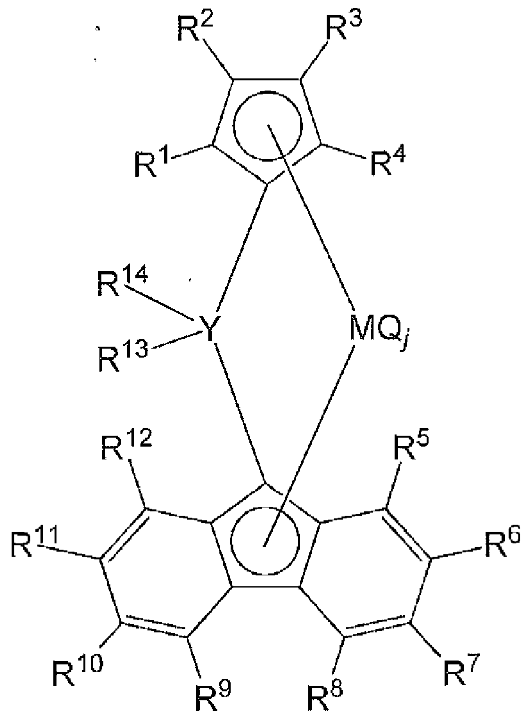

... (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

**INTERNATIONAL SEARCH REPORT**

International application No. PCT/JP2019/013003

A. CLASSIFICATION OF SUBJECT MATTER
Int. Cl. C10M169/04(2006.01)i, C08F4/6592(2006.01)i, C08F210/16(2006.01)i, C10M101/02(2006.01)n, C10M107/02(2006.01)n, C10M143/00(2006.01)n

According to International Patent Classification (IPC) or to both national classification and IPC

B. FIELDS SEARCHED

Minimum documentation searched (classification system followed by classification symbols)
Int. Cl. C10M169/04, C10M101/02, C10M107/02, C10M143/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/147215 A1 (MITSUI CHEMICALS, INC.) 01 October 2015, claims 1-27, paragraphs [0008], [0010], [0044]-[0196], examples 2, 4, 7-8, tables 3, 4 & US 2017/0114166 A1, claims 1-27, paragraphs [0008], [0018], [0072]-[0244], examples 2, 4, 7-8, tables 3, 4 & EP 3124505 A1 & KR 10-2016-0121566 A & CN 106133006 A | 1-3, 6-14<br>4-5 |
| Y | US 2015/0266985 A1 (DAELIM INDUSTRIAL CO., LTD.) 24 September 2015, claims 1-9, examples 1, 4 & WO 2014/077617 A1 & EP 2921509 A1 & KR 10-1394943 B & CN 104797608 A | 4-5 |
| A | WO 2018/131543 A1 (MITSUI CHEMICALS, INC.) 19 July 2018, claims 1-5, paragraph [0023] (Family: none) | 1-14 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20.06.2019 | 02.07.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H0853683 A
- JP 4414123 B
- JP 3816847 B
- JP 2009256665 A
- JP 2016069404 A
- EP 2921509 A1
- EP 0776959 A
- EP 0668342 A
- WO 9721788 A
- WO 0015736 A
- WO 0014188 A
- WO 0014187 A
- WO 0014183 A
- WO 0014179 A
- WO 0008115 A
- WO 9941332 A
- EP 1029029 A
- WO 0118156 A
- WO 0157166 A
- US 3780128 A
- US 4032591 A
- JP H01163136 A
- US 3909432 A
- US 4960878 A
- US 5041584 A
- KR 10551147 A
- JP H01501950 A
- JP H03179005 A
- JP H03179006 A
- JP H03207703 A
- JP H03207704 A
- US 5321106 A
- JP 2004051676 A

### Non-patent literature cited in the description

- API Publication 1509. April 2002
- *Tosoh Research & Technology Review,* 2003, vol. 47, 55